(19) Europäisches Patentamt
European Patent Office
Office européen des brevets

(11) **EP 3 582 172 A1**

## (12) EUROPEAN PATENT APPLICATION

(43) Date of publication:
**18.12.2019 Bulletin 2019/51**

(51) Int Cl.:
**G06Q 50/04** *(2012.01)*

(21) Application number: **19175367.2**

(22) Date of filing: **20.05.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.06.2018   JP 2018112125**

(72) Inventors:
• **KUMAMOTO, Hiroshi**
  **Kyoto-shi, Kyoto 600-8530 (JP)**
• **ISHIBASHI, Hiroyuki**
  **Kyoto-shi, Kyoto 600-8530 (JP)**

(74) Representative: **Horn Kleimann Waitzhofer
Patentanwälte PartG mbB
Ganghoferstrasse 29a
80339 München (DE)**

(71) Applicant: **OMRON Corporation
Shiokoji-dori, Shimogyo-ku
Kyoto-shi
Kyoto 600-8530 (JP)**

(54) **MANUFACTURE MANAGEMENT APPARATUS, MANUFACTURE MANAGEMENT METHOD, AND PROGRAM**

(57)   Provided is a manufacture management apparatus that can perform a process design based on appropriate operation times. A manufacture management apparatus (1) includes: a planned stock quantity acquisition unit (41) configured to acquire a planned stock quantity for an object to be manufactured in a given manufacturing process; an actual operation data acquisition unit (42) configured to acquire an operation time of an actual operation, and an actual stock quantity when the operation is performed; and an operation time correction unit (43) configured to calculate a corrected operation time by correcting the operation time based on the planned stock quantity and the actual stock quantity.

**FIG. 1**

EP 3 582 172 A1

**Description**

CROSS-REFERENCES TO RELATED APPLICATIONS

This application claims priority to Japanese Patent Application No. 2018-112125 filed June 12, 2018, the entire contents of which are incorporated herein by reference.

FIELD

The present invention relates to an apparatus and the like for performing process design before products are manufactured.

BACKGROUND

A conventional manufacture management method is known in which standard operation times are set in advance, and the process design is performed based on the standard operation times. Here, a standard operation time is set for each manufacturing process, and indicates a time required for an operator having standard proficiency to perform the manufacturing process. Also, a technique for appropriately setting standard operation times is known. For example, JP 2011-158931A discloses an operation time estimation system that estimates the operation time of a new manufacturing process using a time factor that is calculated from operation times taken when operations are actually performed in existing manufacturing processes.
JP 2011-158931A (published on August 18, 2011) and JP H8-194854A (published on July 30, 1996) are examples of background art.

SUMMARY

In the conventional technique as described above, there is a problem in that the increase in proficiency of an operator, and abnormal values in the operation time due to situations of previous and following manufacturing processes or the like and the correction of the abnormal values are not considered, and therefore the standard operation time cannot be accurately set. For example, a case is not considered where, in a given manufacturing process, as a result of the operation being delayed in a manufacturing process that precedes the given manufacturing process, the speed of operation in the given manufacturing process cannot be increased. JP 2011-158931A discloses that abnormal values are excluded when a time factor with respect to a given manufacturing process is calculated, but does not disclose a technique for considering abnormal values in the operation time due to situations of previous and following manufacturing processes or the like. JP H8-194854A discloses that a correction is made when actual production information includes anomalous information in a given manufacturing process, but does not disclose a technique for considering abnormal values in the operation time due to situations of previous and following manufacturing processes or the like.
One aspect of the present invention was achieved in light of the foregoing problems, and an object of the present invention is to provide a manufacture management apparatus that can perform process design based on appropriate operation times.
In order to solve the above-mentioned problem, a manufacture management apparatus according to one aspect of the present invention includes: a planned stock quantity acquisition unit configured to acquire a planned stock quantity, which is a planned value of a stock quantity for an object to be manufactured in a given manufacturing process including an operation performed by an operator; an actual operation data acquisition unit configured to acquire an operation time of an actual operation performed by the operator in the manufacturing process, and an actual stock quantity, which is a stock quantity when the operation is performed; and an operation time correction unit configured to calculate a corrected operation time by correcting the operation time based on the planned stock quantity and the actual stock quantity.
According to this configuration, the manufacture management apparatus can correct the operation time in a given manufacturing process based on a planned value of the stock quantity and an actual stock quantity. Accordingly, a manufacture management apparatus can be provided that can perform process design based on an appropriate operation time that has been corrected based on a difference between the planned value of the stock quantity and the actual stock quantity.
In the manufacture management apparatus according to one aspect of the present invention, the planned stock quantity may be a planned stock quantity before processing, which is an appropriate stock quantity for an object to be manufactured that is on standby in a state in which the operation can be performed on the object to be manufactured, and the actual stock quantity may be an actual stock quantity before processing, which is a stock quantity of the object to be manufactured that is on standby in a state in which the operation can be performed on the object to be manufactured, when the operation is performed. According to this configuration, the manufacture management apparatus can correct the operation time of a given manufacturing process based on a difference between a planned value of the stock quantity and an actual stock quantity, the difference being caused by a manufacturing process previous to the given manufacturing process.

In the manufacture management apparatus according to one aspect of the present invention, the planned stock quantity may be a planned stock quantity after processing, which is an appropriate stock quantity for an object to be manufactured on which the operation has been performed and that is on standby in a state in which it can be subjected to a following manufacturing process, and the actual stock quantity is an actual stock quantity after processing, which is a stock quantity of the object to be manufactured on which the operation has been performed and that is on standby in a state in which it can be subjected to the following manufacturing process, when the operation is performed. According to this configuration, the manufacture management apparatus can correct the operation time of a given manufacturing process based on a difference between a planned value of the stock quantity and an actual stock quantity, the difference being caused by a manufacturing process following the given manufacturing process.

The manufacture management apparatus according to one aspect of the present invention may further include a standard operation time calculation unit configured to calculate a standard operation time in the manufacturing process based on a history of at least one of the operation time and the corrected operation time. According to this configuration, the manufacture management apparatus can calculate a standard operation time with respect to an operation time of a given manufacturing process based on a past history of the given manufacturing process. With this, accurate process design can be performed by combining standard operation times calculated for respective manufacturing processes, for example.

In the manufacture management apparatus according to one aspect of the present invention, the actual operation data acquisition unit may be configured to acquire operator information for identifying an operator corresponding to the operation time and the actual stock quantity, and the standard operation time calculation unit may be configured to calculate the standard operation time for the operator. According to this configuration, the manufacture management apparatus can calculate a standard operation time with respect to an operation time of a given manufacturing process for each operator that has performed the given manufacturing process.

In the manufacture management apparatus according to one aspect of the present invention, the operation time correction unit may be configured to determine whether or not the operation time is an abnormal value, and the standard operation time calculation unit may not use the operation time that has been determined to be an abnormal value by the operation time correction unit to calculate the standard operation time. According to this configuration, the manufacture management apparatus can calculate a standard operation time with respect to an operation time of a given manufacturing process using a history obtained by excluding an abnormal value from a past history.

In the manufacture management apparatus according to one aspect of the present invention, the actual operation data acquisition unit may determine whether or not the operation time is lower than a predetermined lower limit value, and if the operation time is determined to be lower than a predetermined lower limit value, the manufacture management apparatus may output a warning. According to this configuration, the manufacture management apparatus can output a warning when the actual operation time in a given manufacturing process is an abnormal value that is lower than a lower limit value. With this, an operator is caused to confirm whether or not the abnormal value is caused by a "process skip" in which the operator has skipped the given manufacturing process and has proceeded to the following manufacturing process, for example.

In the manufacture management apparatus according to one aspect of the present invention, the operation time correction unit may be configured to calculate the corrected operation time based on a time period obtained by subtracting, from the operation time, a period in which the actual stock quantity for an object to be manufactured that is on standby in a state in which the operation can be performed on the object to be manufactured is 0, and a period in which the actual stock quantity for an object to be manufactured on which the operation has been performed and that is on standby in a state in which it can be subjected to a following manufacturing process is a maximum stock quantity. According to this configuration, the manufacture management apparatus can, after excluding a period in which the actual stock quantity for an object to be manufactured that is ready to be used in a given manufacturing process is 0, and a period in which the actual stock quantity for an object to be manufactured that is ready to be used in the following manufacturing process is a maximum stock quantity from an operation time in the given manufacturing process, calculate a corrected operation time by correcting the obtained operation time. With this, influence of a wait time caused by the manufacturing processes previous to and following a given manufacturing process can be removed from a history of the operation time of the given manufacturing process.

A manufacture management method according to another aspect of the present invention is a method including: a planned stock quantity acquisition step of acquiring a planned stock quantity, which is a planned value of a stock quantity for an object to be manufactured in a given manufacturing process including an operation performed by an operator; an actual operation data acquisition step of acquiring an operation time of an actual operation performed by the operator in the manufacturing process, and an actual stock quantity, which is a stock quantity when the operation is performed; and an operation time correction step of calculating a corrected operation time by correcting the operation time based on the planned stock quantity and the actual stock quantity. According to this configuration, the same effects as the above-described one aspect of the present invention can be achieved.

According to one aspect of the present invention, a manufacture management apparatus that can perform process design based on appropriate operation times can be provided.

BRIEF DESCRIPTION OF THE DRAWINGS

FIG. 1 is a block diagram illustrating one example of the main configuration of a manufacture management apparatus according to an embodiment.

FIG. 2 is a schematic diagram illustrating an example of the flow of creating an operation plan using standard operation times obtained based on a past operation record using a manufacture management apparatus according to an application example and implementing the operation plan.

FIG. 3 is a schematic diagram illustrating an example of a process specification created using standard operation times calculated by the manufacture management apparatus according to the embodiment.

FIG. 4 is a schematic diagram illustrating, when operations are performed according to a process sequence, a case where all processes are properly completed and a case where an anomaly has occurred in a specific process.

FIG. 5 is a schematic diagram illustrating an exemplary correction of an operation time based on a failure in a previous process in a manufacturing line.

FIG. 6 is a schematic diagram illustrating an exemplary correction of an operation time based on a failure in a following process in the manufacturing line.

FIG. 7 is a graph illustrating an application example of a correction factor that the manufacture management apparatus according to the embodiment applies to an actual operation time of a current process, (a) illustrating a relationship between the number of stocks of the previous process and the correction factor, and (b) illustrating a relationship between the number of stocks for the following process and the correction factor.

FIG. 8 is a graph illustrating the distribution and target values of operation times of operators that is output from the manufacture management apparatus according to the embodiment.

FIG. 9 is a flowchart illustrating an example of a flow of processing performed by the manufacture management apparatus according to the embodiment.

FIG. 10 is a block diagram illustrating an example of the main configuration of the manufacture management apparatus according to a modification and an operation planning terminal.

DETAILED DESCRIPTION

1. Application example

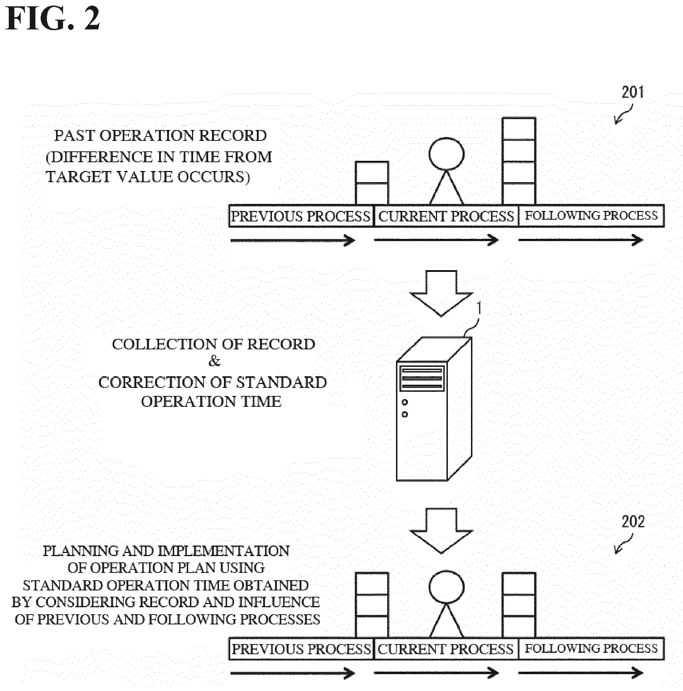

First, an exemplary scene to which the present invention is applied will be described using FIG. 2. FIG. 2 is a schematic diagram illustrating a flow of creating an operation plan using standard operation times obtained based on a past operation record using a manufacture management apparatus 1 according to this application example and implementing the operation plan.

The manufacture management apparatus 1 is an apparatus that manages operation times of processes when performing process design for manufacturing objects to be manufactured. Specifically, the manufacture management apparatus 1 can perform correction, in a plurality of manufacturing processes for manufacturing the objects to be manufactured, on the operation time of each process based on situations of processes previous to and following the process.

The manufacture management apparatus 1 can calculate a standard operation time of the operation time of each process using corrected values. Here, the standard operation time is set for each manufacturing process, and indicates a time taken when the manufacturing process is performed by an operator having a standard proficiency. That is, the manufacture management apparatus 1 according to the application example can, in a process design including a plurality of manufacturing processes, correct the operation time of each process based on situations of processes previous and following the process, and calculate a standard operation time thereof.

An example 201 illustrates an operation situation of a manufacturing process at a certain past point in time. The example 201 indicates that three manufacturing processes of a previous, current, and following processes are performed in an operation sequence of the previous process, the current process, and the following process in this order. Also, the blocks piled up between the previous process and the current process indicate products of the previous process and also indicates the stock quantity of objects to be manufactured in the current process. Similarly, the blocks piled up between the current process and the following process indicate products of the current process and also indicates the stock quantity of objects to be manufactured in the following process. Needless to say, although only an operator is illustrated at a position corresponding to the current process, other operators corresponding to the previous and following processes may be arranged.

Focusing on the current process, the number of blocks indicating the stock quantity of the object to be manufactured in the current process is not equal to the number of blocks indicating the stock quantity of the products. This indicates that the speed of the following process to be performed on the products of the current process has decreased due to some reason, and the number of unprocessed products has increased. In this case, the operator of the current process may reduce the own operation speed to match the processing speed of the following process. This causes the actual operation time of the current process to deviate from an initial target value, and therefore calculation of an appropriate standard operation time of the current process from a history of operation times is hindered. Therefore, it is desirable that an appropriate correction is performed on the actual values of the operation time.

The manufacture management apparatus 1 collects actual values of the operation time shown in the example 201, and can calculate an appropriate standard operation time when similar process design is performed later by accumulating the actual values of the operation time that have been subjected to correction as necessary. The operation time may be corrected by subtracting a wait time, which is a period in which the operator of the current process waited for a stock being added because there is no stock in the previous process, for example.

An example 202 shows an operation situation when objects to be manufactured are manufactured based on an operation plan created using standard operation times that have been calculated using operation times corrected by the manufacture management apparatus 1. In the illustrated example, the number of blocks indicating the stock quantity of objects to be manufactured in the current process matches the number of blocks indicating the manufacturing result, which indicates the operation speed of the current process matches the operation speeds of the previous and following processes.

In this way, the manufacture management apparatus 1 corrects the operation time of each manufacturing process based on the past operation records considering manufacturing processes previous to and following the manufacturing process, and can calculate standard operation times using corrected operation times. With this, an accurate operation plan can be created.

2. Exemplary configuration

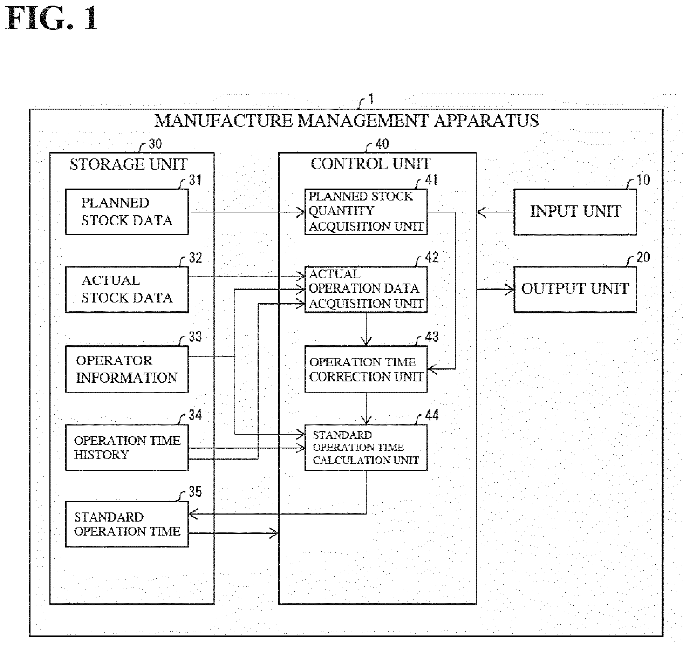

Hereinafter, one embodiment of the present invention will be described in detail using FIGS. 1 and 3 to 10.

Configuration of manufacture management apparatus

The configuration of the manufacture management apparatus 1 according to this exemplary configuration will be described using FIG. 1. FIG. 1 is a block diagram illustrating one example of the main configuration of the manufacture management apparatus 1. The manufacture management apparatus 1 includes an input unit 10, an output unit 20, a storage unit 30, and a control unit 40, and the storage unit 30 stores planned stock data 31, actual stock data 32, operator information 33, an operation time history 34, and standard operation times 35. Also, the control unit 40 includes a planned stock quantity acquisition unit 41, an actual operation data acquisition unit 42, an operation time correction unit 43, and a standard operation time calculation unit 44.

The input unit 10, upon receiving various types of inputs to the manufacture management apparatus 1, transmits information corresponding to the received input to the control unit 40. The input unit 10 may be an input apparatus such as a keyboard or mouse, or a combination thereof. The input unit 10 may be an interface for receiving input information from an external apparatus that makes an input to the manufacture management apparatus 1.

The output unit 20 can output information received from the control unit 40. The output unit 20 may be an output apparatus such as a display in which information is output to a screen or a speaker that outputs sound, or may be a combination thereof.

The storage unit 30 stores various types of information that are handled by the manufacture management apparatus 1. The planned stock data 31 represents, with respect to each of various manufacturing processes, a planned stock quantity, which is a planned value of the stock quantity for an object to be manufactured in the manufacturing process. The planned stock data 31 can manage an appropriate stock quantity for each manufacturing process on a daily basis, for example. The planned stock data 31 may represent the planned stock quantity at the start of one day or the quantity at the end of one day.

The actual stock data 32 represents, with respect to each of the various manufacturing process, an actual stock quantity, which is an actual stock quantity when the manufacturing process is performed. The actual stock data 32 may be updated in real time, based on the actual stock quantity for an object to be manufactured that is ready to be used in each manufacturing process, the actual stock quantity being detected by a sensor or the like at the site of the manufacturing process.

The operator information 33 is information for identifying operators. Conversely, an operator at an operation site can be uniquely identified using the operator information 33. The operator information 33 may store information regarding the degree of proficiency of an operator with respect to various manufacturing processes, other than the information for identifying the operator, for example.

The operation time history 34 is, with respect to each of the various manufacturing processes, a past history of an operation time taken from the start of the manufacturing process to the end thereof. In other words, the operation time history 34 stores past operation records with respect to the various manufacturing processes. In this exemplary configuration, the manufacture management apparatus 1 calculate standard operation times using the operation time history 34.

The standard operation time 35 is a standard operation time of each manufacturing process. That is, the standard operation time 35 is a time needed for an operator having standard proficiency to perform each manufacturing process.

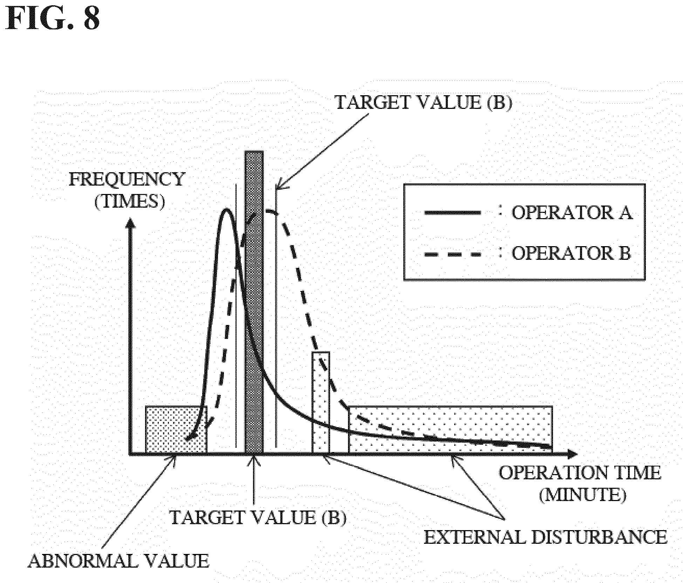

The control unit 40 integrally controls the units of the manufacture management apparatus 1. The control unit 40 transmits instructions to the units according to the input received by the input unit 10. The control unit 40 outputs the result of processing performed by the units to an external apparatus using the output unit 20. Also, the control unit 40, upon receiving an input from the input unit 10 requesting an output of a graph showing the distribution and target values of operation times of operators shown in FIG. 8, which will be described alter, generates the graph from various types of information stored in the storage unit 30, and outputs the graph to an external apparatus using the output unit 20.

The planned stock quantity acquisition unit 41 can, following the instruction from the control unit 40, acquire a planned stock quantity with respect to a given manufacturing process from the planned stock data 31, and transmit the planned stock quantity to the operation time correction unit 43.

The actual operation data acquisition unit 42 can, following the instruction from the control unit 40, acquire an actual stock quantity with respect to a given manufacturing process from the actual stock data 32, and transmit the actual stock quantity to the operation time correction unit 43. The actual operation data acquisition unit 42 can acquire the history of an operation time when a given manufacturing process was performed in the past or a corrected operation time, which will be described later, from the operation time history 34, and transmit the acquired history to the operation time correction unit 43. Note that the actual operation data acquisition unit 42 may transmit the history of an operation time when a given manufacturing process was performed in the past or a later-described corrected operation time to the operation time correction unit 43 along with information indicating the operator at the time when the history was registered. The actual operation data acquisition unit 42 may determine whether or not the operation time acquired from the operation time history 34 is less than a given lower limit value, and determine that the operation time is an abnormal value if the operation time is less than the given lower limit value.

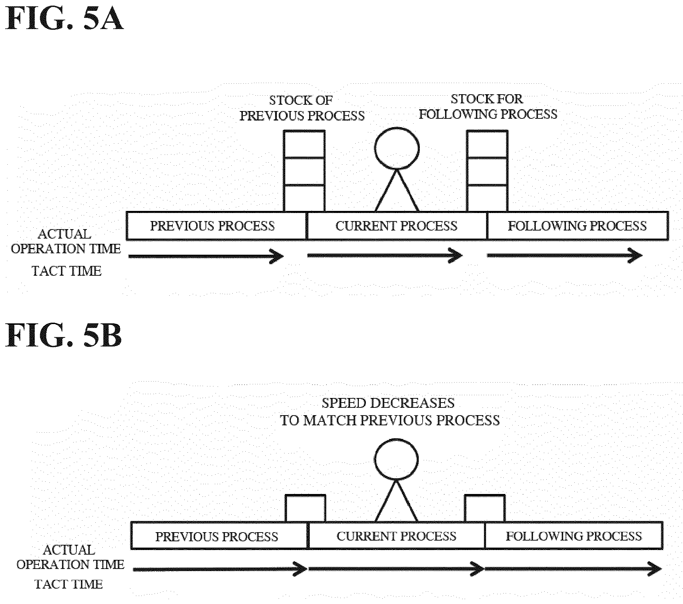

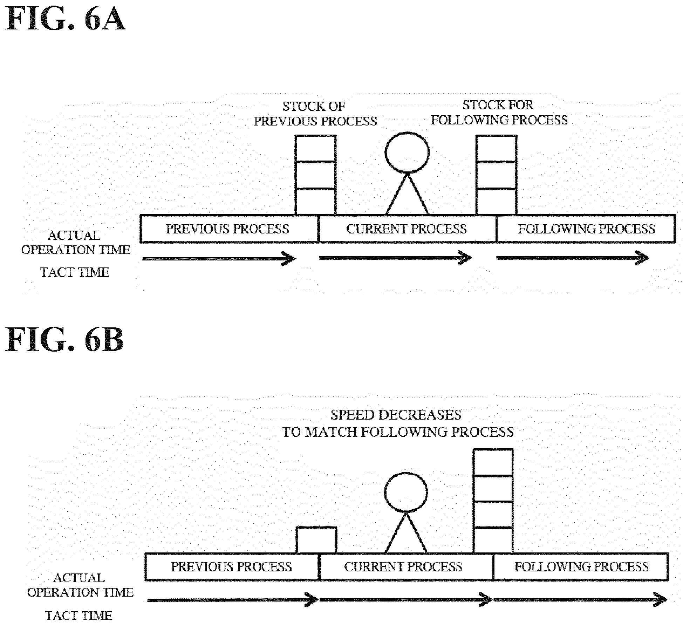

The operation time correction unit 43 acquires a planned stock quantity and an actual stock quantity in a given manufacturing process from the planned stock quantity acquisition unit 41 and the actual operation data acquisition unit 42, respectively. The operation time correction unit 43 can receive an actual operation time of the given manufacturing process from the actual operation data acquisition unit 42, and determine whether or not the received actual operation time is an abnormal value. The operation time correction unit 43 can determine whether an actual operation time having an abnormal value is correctable data in which there is clearly a stagnant time or uncorrectable data due to external disturbance such as an equipment failure. If the actual operation time having an abnormal value is correctable data, the operation time correction unit 43 can calculate a corrected operation time by correcting the actual operation time based on a difference between the planned stock quantity and the actual stock quantity. A specific method of correction will be described later using FIGS. 5 and 6. The operation time correction unit 43 transmits the calculated corrected operation time to the standard operation time calculation unit 44.

The standard operation time calculation unit 44 can acquire a past operation time history regarding a given manufacturing process with respect to which the standard operation time will be calculated from the operation time history 34. The standard operation time calculation unit 44 can acquire information regarding the operator associated with the operation time history acquired from the operation time history 34 from the operator information 33. The standard operation time calculation unit 44 can calculate, based on the history of at least one of the operation time acquired from the operation time history 34 and the corrected operation time received from the operation time correction unit 43, the standard operation time in the given manufacturing process. Note that the standard operation time calculation unit 44 may not use the operation time that was determined to be an abnormal value by the operation time correction unit 43 to calculate the standard operation time. The standard operation time may be calculated by collecting operation times of a current process, and calculating the average/dispersion/median of the collected operation times, for example. The standard operation time calculation unit 44 may create a histogram of operation times of the current process, and output the histogram from the output unit 20.

Process specification

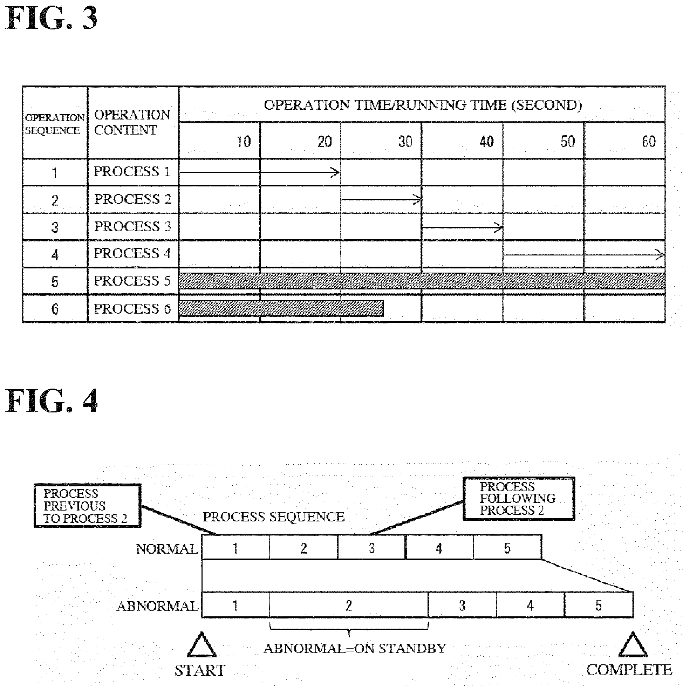

A process specification that can be created using standard operation times calculated by the manufacture management apparatus 1 according to this exemplary configuration will be described using FIG. 3. FIG. 3 is a schematic diagram illustrating an example of a process specification created using standard operation times calculated by the manufacture management apparatus 1.

In the example shown in FIG. 3, the manufacturing process is constituted by six processes 1 to 6 shown in an "operation content" column. Also, the processes 1 to 6 are performed in a sequence shown in an "operation sequence" column in periods corresponding to the length of arrows or horizontal bars shown in an "operation time/running time (second)" column. Note that the periods of the processes 1 to 4, which are indicated by the arrows, are standard operation times calculated by the manufacture management apparatus 1 according to this exemplary configuration, and the periods of the processes 5 and 6, which are indicated by the horizontal bars, are running times needed for automatic machines to perform processing. Also, in the example shown in FIG. 3, the processes 1 to 4 whose "operation time/running time (second)" column includes arrows are manual operations performed by an operator, and the processes 5 and 6 whose "operation time/running time (second)" column includes horizontal bars are automated operations performed by automatic machines.

As shown in FIG. 3, an operator performs the processes 1 to 4 sequentially. Specifically, the operator first starts the process 1, ends the process 1 twenty seconds after the start, and starts the process 2. Then, the operator ends the process 2 ten seconds after the start of the process 2, that is, 30 seconds after the start of the process 1, and starts the process 3. In this way, the operator can perform the manufacturing processes sequentially based on the process specification.

Procedure when anomaly occurs in specific process

The procedure when an anomaly occurs in a specific process, when manufacturing processes are performed according to a process sequence, will be described using FIG. 4. FIG. 4 is a schematic diagram illustrating, when operations are performed according to the process sequence, a case where all of the processes are properly completed and a case where an anomaly occurred in a specific process.

In the example shown in FIG. 4, the manufacturing processes are five processes 1 to 5, and the manufacturing processes are indicated by respective blocks to which numbers 1 to 5 are added. The manufacturing processes are sequentially performed in order of the process 1, the process 2, the process 3, the process 4, and the process 5. Also, the next process cannot be started until the current process is completed. For example, the process 2 is necessarily started after the process 1 is completed. Note that the operation time of each manufacturing process from the start to the end is indicated by the horizontal length of the block indicating the manufacturing process. That is, the horizontal bar graph that is on an upper side in the drawing of FIG. 4 and is denoted by "normal" indicates that the processes 1 to 5 are performed in an approximately the same operation time. On the other hand, the horizontal bar graph that is on a lower side in the drawing and is denoted by "abnormal" indicates that, although the processes 1 and 3 to 5 are performed in the same operation time as those of the processes denoted by "normal", a wait occurs in the process 2 due to an anomaly occurring therein, and as a result, the operation time of the process 2 is longer than that of the process 2 denoted by "normal".

When the manufacturing processes denoted by "normal" are performed, as a result of no anomaly having occurred in the processes 1 to 5, the actual operation times of the respective processes 1 to 5 can be used to calculate the standard operation times without being corrected. On the other hand, when the manufacturing processes denoted by "abnormal" are performed, the actual operation time of the process 2 in which an anomaly has occurred needs to be corrected in order to be used for calculating the standard operation time. Also, it is preferable that the actual operation times of the processes 1 and 3 to 5 are corrected considering the influence of the process 2, although no anomaly has occurred therein.

The actual operation times can be corrected only when a stagnant time of an operation due to anomaly can be clearly identified. Conversely, when a stagnant time of an operation cannot be identified due to an equipment failure or the like, the actual operation time of a process including the stagnant time cannot be corrected. In such a case, the manufacture management apparatus 1 does not use the actual operation time, which is an actual operation time of a process in which an anomaly has occurred, and cannot be corrected because no stagnant time can be identified, to calculate the standard operation time.

Exemplary correction of operation time based on situation of previous process

A method for calculating a correction factor that the manufacture management apparatus 1 according to this exemplary configuration uses to correct the operation time of a current process that has been performed will be described using FIG. 5. FIG. 5 is a schematic diagram illustrating an exemplary correction of an operation time based on a failure in a previous process in a manufacturing line. FIG. 5 (a) shows a case where the previous process, the current process, and the following process are properly performed, and FIG. 5 (b) shows a case, although the current process and the following process are performed properly, a failure occurs in the previous process.

Three manufacturing processes, namely the "previous process", the "current process", and the "following process", are indicated by blocks in the drawing, and arrows denoted as "actual operation time (tact time)" are shown under the blocks. Also, the blocks arranged at a boundary between the previous process and the current process, which are denoted as "stock of the previous process" in the drawing, indicate objects to be manufactured that are products of the previous process and are on standby (i.e. ready and/or retrievable) in a state in which the operation of the current process can be performed thereon. Similarly, the blocks arranged at a boundary between the current process and the following process, which are denoted as "stock for the following process" in the drawing, indicate objects to be manufactured that are products of the current process and are on standby in a state in which the operation of the following process can be performed thereon. In other words, when the current process receives a product of the previous process, the current process is performed on the product, and the resultant product is sent to the following process as the "stock for the following process".

FIG. 5 (a) shows a case where the previous process, the current process, and the following process are properly performed. Here, the speed of the previous process to manufacture the product, the speed of the current process to manufacture the product, and the speed of the following process to manufacture the product are matched. That is, the pace at which the blocks denoted as "stock of the previous process" are added as a result of the previous process being performed is equal to the pace at which the blocks denoted as "stock of the previous process" are processed to the blocks denoted as "stock for the following process" as a result of the current process being performed. Also, the pace at which the blocks denoted as "stock for the following process" are added as a result of the current process being performed is equal to the pace at which the blocks are processed as a result of the following process being performed. Accordingly, the operator who performs the current process can operates in a state in which the number of blocks denoted as "stock of the previous process" and the number of blocks denoted as "stock for the following process" are kept at a fixed number (=appropriate stock quantity). In this case, the manufacture management apparatus 1 needs not to correct the actual operation time of the current process. Note that, because the appropriate stock quantity is a stock quantity when the manufacturing processes are properly performed, the appropriate stock quantity can be set, in advance, as a planned stock quantity, which is a planned value of the stock quantity. That is, the blocks denoted as "stock of the previous process" in FIG. 5 (a) is a planned stock quantity before processing, which is a planned stock quantity before the current process is performed.

FIG. 5 (b) shows a case, although the current process and the following process are performed properly, a failure occurs in the previous process, and processes are performed in a state in which the speed of manufacturing in the previous process has decreased. In other words, a case is shown where the actual stock quantity of products of the previous process deviates from the appropriate stock quantity due to failure, and the actual operation time in the current process or the like deviates from the planned value at the time of performing the process design. That is, in FIG. 5 (b), the blocks denoted as "stock of the previous process" indicates an actual stock quantity before processing, which is an actual stock quantity when the current process is performed.

As described above, a product of the previous process is processed in the current process. Therefore, when the speed of the previous process to manufacture products decreases due to a failure or the like, and the stock of the previous process has decreased, the operation speed of the current process decreases in many cases due to psychological influence. Therefore, if the actual operation time of the current process in a situation in which the operation speed has decreased in this way is stored as a history as is, and the process design is performed using the history, the standard operation time cannot be appropriately set. Therefore, the manufacture management apparatus 1 can set an appropriate standard operation time using the history by correcting the actual operation time of the current process when the manufacturing speed of the previous process has decreased based on the situation of the previous process, and storing the corrected actual operation time.

The actual operation time of the current process is corrected using the following method based on a stock quantity, for example. When the manufacturing speed of the previous process decreases, the actual stock quantity of the "stock of the previous process" deviates from the planned stock quantity. Here, the manufacture management apparatus 1 corrects the actual operation time based on the planned stock quantity and the actual stock quantity of the current process, and calculates a corrected operation time. Specifically, the operation time correction unit 43 of the manufacture management apparatus 1 acquires the planned stock quantity of the current process from the planned stock quantity acquisition unit 41, and acquires the actual stock quantity of the current process and the actual operation time of the current process from the actual operation data acquisition unit 42. Also, the operation time correction unit 43 calculates a ratio of deviation of the actual stock quantity of the current process from the planned stock quantity, and sets the ratio of deviation to the correction factor to be applied to the actual operation time. The operation time correction unit 43 further calculates a corrected operation time of the current process by applying the correction factor to the actual operation time of the current process. That is,

$$\text{(correction factor of current process)} = 1 - ((\text{planned stock quantity of current process}) - (\text{actual stock quantity of current process})) / (\text{planned stock quantity of current process}),$$

and

$$\text{(corrected operation time of current process)} = (\text{actual operation time of current process}) \times (\text{correction factor of current process}).$$

Note that, even if the actual stock quantity exceeds the appropriate stock quantity, because the operation time saturates, the maximum value of the correction factor is 1.0 (the details will be described later).

The manufacture management apparatus 1 can correct the actual operation time of the current process in this way. Also, as a result of setting the standard operation time of the current process using the corrected operation time, an appropriate process design can be performed.

Note that, in an actual site, a case is conceivable where the "stock of the previous process" decreases to 0 due to complete stop of the previous process or the like, and the operator of the current process needs to suspend the operation. In this case, the manufacture management apparatus 1 may determine the stop time of the previous process and the wait time until the "stock of the previous process" increases to 1 as the loss time of the previous process, and calculate the corrected operation time of the current process based on the correction factor and the loss time, for example. That is,

$$\text{(loss time of previous process)} = (\text{stop time of previous process}) + (\text{time needed for actual stock quantity of current process to increase from 0 to 1}),$$

$$\text{(corrected operation time of current process)} = ((\text{actual operation time of current process}) - (\text{loss time of previous process})) \times (\text{correction factor of current process}).$$

The manufacture management apparatus 1 can calculate the corrected operation time of the current process based on whether or not the actual stock of the previous process is present, in this way.

Exemplary correction of operation time based on situation of following process

A method for calculating a correction factor that the manufacture management apparatus 1 according to this exemplary configuration uses to correct the operation time of a current process that has been performed will be described using FIG. 6. FIG. 6 is a schematic diagram illustrating an exemplary correction of an operation time based on a failure in the following process in a manufacturing line. FIG. 6 (a) shows a case where a previous process, the current process, and the following process are properly performed, and FIG. 6 (b) shows a case where, although the previous process and the current process are performed properly, a failure occurs in the following process. Note that the items in the drawing correspond to the items of the same name in FIG. 5.

FIG. 6 (a) shows the same case as FIG. 5 (a), that is, the case where the previous process, the current process, and the following process are properly performed. That is, the pace at which the blocks denoted as "stock of the previous process" are added is equal to the pace at which the blocks denoted as "stock of the previous process" are processed to the blocks denoted as "stock for the following process". Also, the "stock of the previous process" and the "stock for the following process" are equal to the planned stock quantity. That is, the blocks denoted as "stock for the following process" in FIG. 6 (a) show the planned stock quantity after processing, which is a planned stock quantity of the products that have been subjected to the processing in the current process, and are to be processed in the processing in the following process, which is a manufacturing process of the next step. When the "stock of the previous process" and the "stock for the following process" are equal to the planned stock quantity, the manufacture management apparatus 1 need not to correct the actual operation time of the current process.

FIG. 6 (b) shows a case, although the previous process and the current process are performed properly, a failure occurs in the following process, and processes are performed in a state in which the speed of manufacturing in the following process has decreased. In this case, it is conceivable that the speed of manufacturing in the previous process and the current process decreases in order to match the speed of manufacturing in the following process. That is, when the manufacturing speed in the following process, which is a manufacturing process next to the current process, has decreased due to a failure and the stock for the following process has increased, the operation speed of an operator of the current process decreases in many cases due to psychological influence. The actual stock quantity of the objects to be manufactured that are on standby in a state in which the operation of the following process can be performed thereon as the "stock for the following process" is the actual stock quantity after processing, which is an actual stock quantity of products that have been subjected to the processing in the current process. Here, it is preferable that the speed of manufacturing in the current process is reduced such that the actual stock quantity after processing does not exceed a maximum stock quantity, which is the maximum stock quantity of products that can be on standby. The manufacture management apparatus 1 can appropriately set the standard operation time using the history by correcting the actual operation time of the current process in such a case based on the situation of the following process, and storing the corrected actual operation time.

The actual operation time of the current process is corrected using a method that is similar to that described using FIG. 5 (b). When the speed of manufacturing in the following process has decreased, the actual stock quantity of the "stock for the following process" deviates from the planned stock quantity. Here, the manufacture management apparatus 1 corrects the actual operation time based on the planned stock quantity and the actual stock quantity in the following process, and calculates the corrected operation time. That is,

$$\text{(correction factor of current process)} = 1 - ((\text{actual stock quantity of following process}) - (\text{planned stock quantity of following process})) / (\text{planned stock quantity of following process}),$$

$$\text{(corrected operation time of current process)} = (\text{actual operation time of current process}) \times (\text{correction factor of current process}).$$

Note that, even if the actual stock quantity decreases below the appropriate stock quantity, because the operation time saturates, the maximum value of the correction factor is 1.0 (the details will be described later).

The manufacture management apparatus 1 can correct the actual operation time of the current process in this way. Also, as a result of setting the standard operation time of the current process using the corrected operation time, an appropriate process design can be performed.

Note that, in an actual site, a case is conceivable where the "stock for the following process" reaches the maximum stock quantity due to complete stop of the following process or the like, and the operator of the current process needs to suspend the operation. In this case, the manufacture management apparatus 1 may determine the stop time of the following process and the period during which the "stock for the following process" is the maximum stock quantity as the loss time of the following process, and calculate the corrected operation time of the current process based on the correction factor and the loss time, for example. That is,

$$\text{(loss time of following process)} = (\text{stop time of following process}) + (\text{period during which actual stock quantity of following process is maximum stock quantity}),$$

$$\text{(corrected operation time of current process)} = ((\text{actual operation time of current process}) - (\text{loss time of following process})) \times (\text{correction factor of current process}).$$

The manufacture management apparatus 1 can calculate the corrected operation time of the current process based on the actual stock quantity of the following process, in this way.

Note that the manufacture management apparatus 1 may calculate the standard operation time of the current process for each operator that has performed the current process. For example, the operation time correction unit 43 may receive operator information of an operator that has performed the current process from the actual operation data acquisition unit 42, and transmit the received operator information to the standard operation time calculation unit 44. Also, the standard operation time calculation unit 44 may acquire at least one of the operation time and the corrected operation time of the current process when the operator has performed the current process in the past from the operation time history 34, and calculate the standard operation time for each of the operators.

The manufacture management apparatus 1 may acquire the stop time and the like of the previous process and the following process from an "andon" that is installed in a site of the manufacturing process, for example. Here, the "andon" is a reporting system that is operated by an operator in the manufacturing line to report an anomaly to people in the vicinity of the operator. For example, the manufacture management apparatus 1 may acquire the period, as the stop time, from when a button for reporting an anomaly was pressed until the anomaly has been taken care of and a button for reporting restoration is pressed.

Application example of correction factor

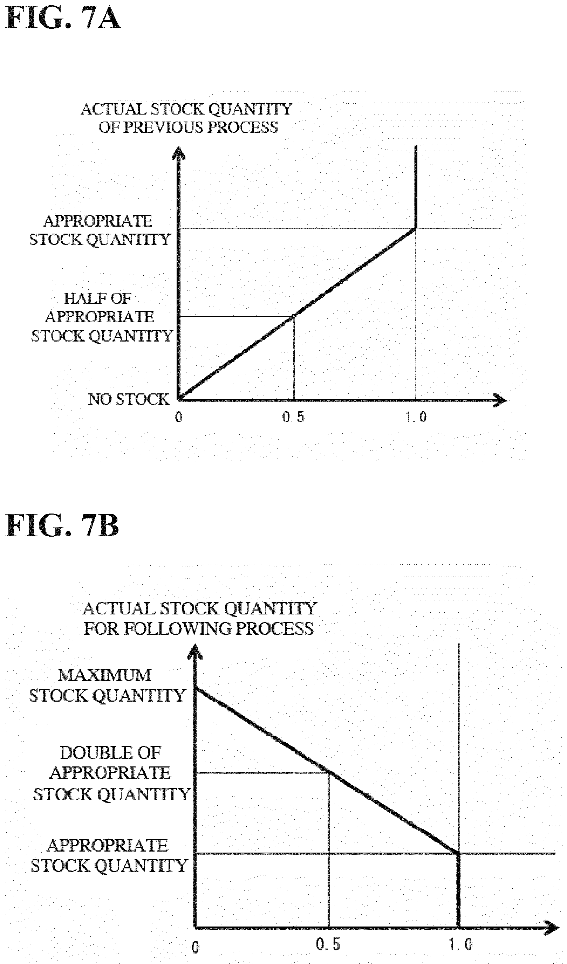

An application example of a correction factor that the manufacture management apparatus 1 according to this exemplary configuration applies to the actual operation time of the current process will be described using FIG. 7. FIG. 7 is a graph illustrating an application example of a correction factor that the manufacture management apparatus 1 applies to the actual operation time of the current process, (a) illustrating a relationship between the number of stocks of the previous process and the correction factor, and (b) illustrating a relationship between the number of stocks for the following process and the correction factor.

In FIG. 7 (a), the vertical axis shows the actual stock quantity of the previous process, and the horizontal axis shows the correction factor to be applied to the actual operation time of the current process. Note that the appropriate stock quantity is a stock quantity that is to be kept as the actual stock of the previous process when the manufacturing processes are performed according to the initial operation plan. In the example in FIG. 7 (a), the correction factor is in direct proportional relationship with the stock quantity of the previous process in a range of the stock quantity of the previous process from zero to the appropriate stock quantity, and the correction factor is 0 when the stock quantity of the previous process is not present. This indicates that, because the current process cannot be performed if the stock quantity of the product of the previous process is not present, the current process needs to be stopped. Also, the correction factor when the stock quantity of the previous process is the appropriate stock quantity is 1.0, and even when the stock quantity of the previous process exceeds the appropriate stock quantity, the correction factor is kept to be 1.0. This indicates that, when the operation plan is created such that the operation speed of the current process is at the maximum when the stock quantity of the previous process is the appropriate stock quantity, even if the stock quantity of the previous process exceeds the appropriate stock quantity, the operation speed of the current process cannot be increased.

In FIG. 7 (b), the vertical axis shows the actual stock quantity for the following process, and the horizontal axis shows the correction factor to be applied to the operation time of the current process. Note that the appropriate stock quantity indicates, when the manufacturing processes are performed according to the initial operation plan, the stock quantity that is to be kept as the actual stock for the following process. In the example in FIG. 7 (b), the correction factor is proportional to the stock quantity for the following process in a range of the stock quantity for the following process from the maximum stock quantity to the appropriate stock quantity. Specifically, the correction factor is 0 when the stock quantity for the following process is the maximum stock quantity. This indicates that, because additional stock is not allowed in the following process even if the product is tried to be added by performing the current process, the current process needs to be stopped. Also, the correction factor is 1.0 when the stock quantity for the following process is the appropriate stock quantity, and the correction factor is kept to be 1.0 even if the stock quantity for the following process decreases below the appropriate stock quantity. This indicated that, when the operation plan is created such that the operation speed of the current process is at the maximum when the stock quantity for the following process is the appropriate stock quantity, even if the stock quantity for the following process decreases below the appropriate stock quantity, the operation speed of the current process cannot be increased.

Distribution of operation time and setting of target values

The distribution of actual values of the operation times used by the manufacture management apparatus 1 according to this exemplary configuration to calculate the standard operation times and target values are shown in FIG. 8. FIG. 8 is a graph illustrating the distribution and target values of operation times of operators that is output from the manufacture management apparatus 1 according to this exemplary configuration.

In the graph in the example in FIG. 8, the horizontal axis shows the operation time, and the vertical axis shows the frequency of the actual value of the operation time. The solid line shows the distribution of the actual values of the operation time of a skilled "operator A", and the broken line shows the distribution of the actual values of the operation time of an "operator B" who is a different operator and is not skilled in the operation as the "operator A".

In the example in FIG. 8, the operation times having substantially low values are considered to be abnormal values due to a "process skip" in which the manufacturing process to be measured is skipped and the processing advanced to the next manufacturing process or malfunction of a measurement instrument, for example. Note that the manufacture management apparatus 1 may determine the operation time is an abnormal value when the value of the operation time is lower than a predetermined lower limit value. Also, when an abnormal value is detected, the manufacture management apparatus 1 may cause an operator of the process to confirm whether or not the anomaly is present in the operation performed by the operator such as a "process skip" by outputting a warning or the like.

On the other hand, it can be considered that the substantially large operation times are due to an external disturbance such as an equipment failure. When the graph of the "operator A" is compared with the graph of the "operator B", it is apparent that the most frequent value of the operation time whose value in the vertical axis is largest with respect to the "operator A" is lower than that with respect to the "operator B". With this, it is conceivable that the "operator B" can reduce the own operation time to the extent of the operation time of the "operator A" that is indicated by the most frequent value in the graph, when getting skilled in the operation, for example.

The manufacture management apparatus 1 shows a value that is slightly lower than the most frequent value of the operation time in the graph of the "operator B" denoted by "target value (B)" in the drawing as an latest target of the "operator B", for example. With this, the "operator B" can be notified of the distribution and the target value of the operation time. That is, the manufacture management apparatus 1 may notify the "operator B" of the distribution and the target value of the operation time by outputting the graph shown in FIG. 8 in the output unit 20.

Processing flow

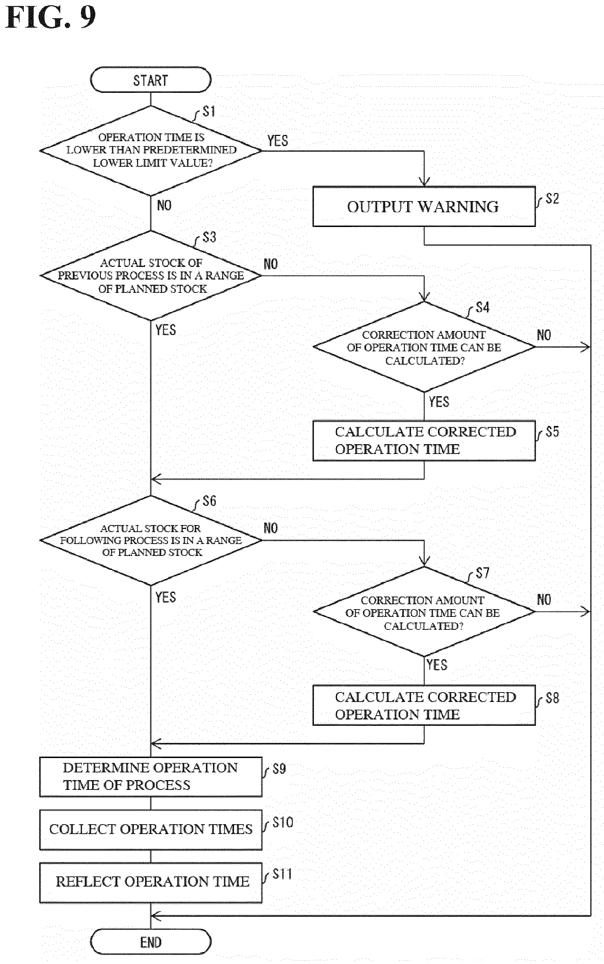

The flow of processing performed by the manufacture management apparatus 1 according to this exemplary configuration will be described using FIG. 9. FIG. 9 is a flowchart illustrating an example of the flow of processing performed by the manufacture management apparatus 1.

Note that the following description describes a case where the operation time is corrected and the standard operation time is calculated with respect to a specific manufacturing process (= current process), and the series of processing may be applied to any manufacturing process, for example.

First, the actual operation data acquisition unit 42 acquires the operation time in the current process from the operation time history 34, and determines whether or not the acquired operation time is lower than a predetermined lower limit value (step S1). If it is determined that the acquired operation time is lower than the predetermined lower limit value (YES in step S1), the control unit 40 outputs a warning from the output unit 20 (step S2). Thereafter, the series of processing is ended. On the other hand, if it is determined that the acquired operation time is not lower than the predetermined lower limit value (NO in step S1), the processing advances to step S3.

In step S3, the operation time correction unit 43 determines whether or not the actual stock of the process previous to the current process that the actual operation data acquisition unit 42 has acquired from the actual stock data 32 is in a range of the latest planned stock of the process previous to the current process that the planned stock quantity acquisition unit 41 has acquired from the planned stock data 31 (step S3). If it is determined that the actual stock of the process previous to the current process is in the range of the latest planned stock of thereof (YES in step S3), the processing advances to step S4. On the other hand, if it is determined that the actual stock of the process previous to the current process is not in the range of the latest planned stock of thereof (NO in step S3), the operation time correction unit 43 determines whether or not the actual operation time of the current process that the actual operation data acquisition unit 42 has acquired from the operation time history 34 is a correctable data in which the stagnant time is definite (step S4). If it is determined that the actual operation time is correctable (YES in step S4), the operation time correction unit 43 corrects the actual operation time of the current process using the method described above using FIG. 5, and calculates the corrected operation time (step S5). On the other hand, if it is determined that the actual operation time is not correctable (NO in step S4), the series of processing is ended.

In step S6, the operation time correction unit 43 determines whether or not the actual stock for the process following the current process that the actual operation data acquisition unit 42 has acquired from the actual stock data 32 is in a range of the latest planned stock for the process following the current process that the planned stock quantity acquisition unit 41 has acquired from the planned stock data 31 (step S6). If it is determined that the actual stock is in the range of the latest planned stock for the following process (YES in step S6), the processing advances to step S7. On the other hand, if it is determined that the actual stock is not in the range of the latest planned stock for the following process (NO in step S6), the operation time correction unit 43 determines whether or not the actual operation time of the current process that the actual operation data acquisition unit 42 has acquired from the operation time history 34 is a correctable data in which the stagnant time is definite (step S7). If it is determined that the actual operation time is correctable (YES in step S7), the operation time correction unit 43 corrects the actual operation time of the current process using the method described above using FIG. 5, and calculates the corrected operation time (step S8). On the other hand, if it is determined that the actual operation time is not correctable (NO in step S7), the series of processing is ended.

In step S9, the operation time correction unit 43 determines the operation times of the current process that can be used to calculated the standard operation time from the actual operation times of the current process that the actual operation data acquisition unit 42 has acquired from the operation time history 34 and the corrected operation times calculated in steps S5 and S8 (step S9). Thereafter, the standard operation time calculation unit 44 collects the operation times of the current process using the past history of the operation time with respect to the current process that has been acquired from the operation time history 34, and the operation times determined by the operation time correction unit 43 in step S9, and calculates the standard operation time (step S10). Thereafter, the standard operation time calculation unit 44 stores the standard operation time calculated in step S10 in the standard operation time 35 (step S11).

With the processing described above, the manufacture management apparatus 1 according to this exemplary configuration can correct the operation times of the current process based on the actual stocks of the processes previous to and following the current process. Also, the standard operation time of the current process can be calculated using corrected operation times. With this, an accurate operation plan can be created based on the corrected operation times.

3. Modifications

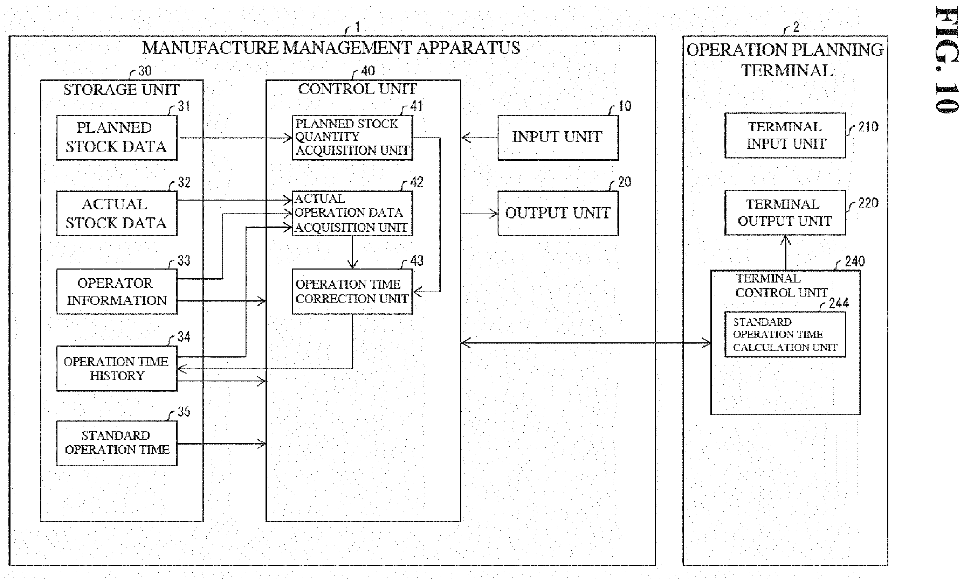

Hereinafter, the modifications of the present invention will be described using FIG. 10. FIG. 10 is a block diagram illustrating an example of the main configuration of the manufacture management apparatus 1 according to a modification and an operation planning terminal 2.

Configuration of manufacture management apparatus

The basic configuration of the manufacture management apparatus 1 according to this modification is the same as that of the manufacture management apparatus 1 according to the exemplary configuration, but some configurations are different. In this modification, the manufacture management apparatus 1 is configured to be able to communicate with the operation planning terminal 2, and does not include the standard operation time calculation unit 44.

Configuration of operation planning terminal

The operation planning terminal 2 is a terminal that can calculate the standard operation time of a manufacturing process using the operation times of the manufacturing process that have been corrected by the manufacture management apparatus 1, and outputs the calculated standard operation time. The operation planning terminal 2 is a communication terminal such as a personal computer that is communicably connected to the manufacture management apparatus 1, for example. The operation planning terminal 2 includes a terminal input unit 210, a terminal output unit 220, and a terminal control unit 240, and the terminal control unit 240 includes a standard operation time calculation unit 244.
The terminal input unit 210, upon receiving various types of inputs to the operation planning terminal 2, transmits information corresponding to the received input to the terminal control unit 240. The terminal input unit 210 may be an input apparatus such as a keyboard or mouse, or a combination thereof. The terminal input unit 210 may be an interface for receiving input information from an external apparatus that makes an input to the operation planning terminal 2.
The terminal output unit 220 can output information received from the terminal control unit 240. The terminal output unit 220 may be an output apparatus such as a display in which information is output to a screen or a speaker that outputs sound, or may be a combination thereof.
The terminal control unit 240 integrally controls the units of the operation planning terminal 2. The terminal control unit 240 can create an operation plan using standard operation times of operation processes that have been calculated by the standard operation time calculation unit 244, and output the created operation plan from the terminal output unit 220.
The standard operation time calculation unit 244 has a function that is similar to that of the standard operation time calculation unit 44 included in the manufacture management apparatus 1 in the exemplary configuration described above. Specifically, the standard operation time calculation unit 244 can acquire a past operation time history of a given manufacturing process with respect to which the standard operation time is calculated from the operation time history 34 via the control unit 40 of the manufacture management apparatus 1. The standard operation time calculation unit 244 can acquire operator information from the operator information 33 via the control unit 40. The standard operation time calculation unit 244 can acquire an operation time from the operation time history 34 via the control unit 40. The standard operation time calculation unit 244 can calculate the standard operation time in the given manufacturing process based on the history of at least one of the operation time and the corrected operation time received from the operation time correction unit 43 via the control unit 40.
The manufacture management apparatus 1 according to this modification can correct actual operation times in a given manufacturing process, similarly to the exemplary configuration. Also, the operation planning terminal 2 can calculate the standard operation time in the given manufacturing process using the actual operation times corrected by the manufacture management apparatus 1. With this, the manufacture management apparatus 1 and the operation planning terminal 2 can be operated such that the manufacture management apparatus 1 is continuously operated as a date center, and the operation planning terminal 2 is operated only when standard operation times are calculated or an operation plan is created using the standard operation times, for example.

Exemplary implementation by software

The control blocks of the manufacture management apparatus 1 and the operation planning terminal 2 (the operation time correction unit 43, the standard operation time calculation unit 44, and the standard operation time calculation unit 244, in particular) may be realized by a logic circuit (hardware) formed on an integrated circuit (IC chip) or the like, or may be realized by software.

In the latter case, the manufacture management apparatus 1 and the operation planning terminal 2 include a computer that executes commands in programs, which are software for implementing the functions. This computer includes at least one processor, and a computer-readable recording medium in which the program is stored, for example. Also, the object of the present invention is achieved by the processor reading out the programs from the recording medium and executing the programs, in the computer. A CPU (central processing unit) can be used as the processor, for example. A "non-transitory medium" such as a ROM (read only memory), tape, a disk, a card, a semiconductor memory, a programmable logic circuit, or the like can be used as the recording medium. Also, a RAM (random access memory) in which the programs are to be deployed may further be included. Also, the programs may also be supplied to the computer through any transmission medium capable of transmitting the programs (a communication network, broadcast waves, or the like). An aspect of the present invention can be realized as data signals embedded in carrier waves so as to realize the electronic transmission of the programs.

The present invention is not intended to be limited to the embodiments described above, and various changes can be made within the scope defined by the claims. Embodiments achieved by appropriately combining the technical means disclosed in different embodiments also fall within the technical scope of the present invention.

INDEX TO THE REFERENCE NUMERALS

1 Manufacture management apparatus
10 Input unit
20 Output unit
30 Storage unit
31 Planned stock data
32 Actual stock data
33 Operator information
34 Operation time history
35 Standard operation time
40 Control unit
41 Planned stock quantity acquisition unit
42 Actual operation data acquisition unit
43 Operation time correction unit
44 Standard operation time calculation unit
2 Operation planning terminal
210 Terminal input unit
220 Terminal output unit
240 Terminal control unit
244 Standard operation time calculation unit

**Claims**

**1.** A manufacture management apparatus (1) comprising:

a planned stock quantity acquisition unit (41) configured to acquire a planned stock quantity, which is a planned value of a stock quantity for an object to be manufactured in a given manufacturing process including an operation performed by an operator;
an actual operation data acquisition unit (42) configured to acquire an operation time of an actual operation performed by the operator in the manufacturing process, and an actual stock quantity, which is a stock quantity when the operation is performed; and
an operation time correction unit (43) configured to calculate a corrected operation time by correcting the operation time based on the planned stock quantity and the actual stock quantity.

**2.** The manufacture management apparatus (1) according to claim 1, wherein the planned stock quantity is a planned stock quantity before processing, which is an appropriate stock quantity for an object to be manufactured that is on standby in a state in which the operation can be performed on the object to be manufactured, and the actual stock quantity is an actual stock quantity before processing, which is a stock quantity of the object to be manufactured that is on standby in a state in which the operation can be performed on the object to be manufactured, when the operation is performed.

3. The manufacture management apparatus (1) according to claim 1 or 2, wherein the planned stock quantity is a planned stock quantity after processing, which is an appropriate stock quantity for an object to be manufactured on which the operation has been performed and that is on standby in a state in which it can be subjected to a following manufacturing process, and the actual stock quantity is an actual stock quantity after processing, which is a stock quantity of the object to be manufactured on which the operation has been performed and that is on standby in a state in which it can be subjected to the following manufacturing process, when the operation is performed.

4. The manufacture management apparatus (1) according to any one of claims 1 to 3, further comprising a standard operation time calculation unit (44, 244) configured to calculate a standard operation time (35) in the manufacturing process based on a history of at least one of the operation time and the corrected operation time.

5. The manufacture management apparatus according to claim 4,
   wherein the actual operation data acquisition unit (42) is configured to acquire operator information (33) for identifying an operator corresponding to the operation time and the actual stock quantity, and
   the standard operation time calculation unit (44, 244) is configured to calculate the standard operation time (35) for each of the operators.

6. The manufacture management apparatus according to claim 4 or 5,
   wherein the operation time correction unit (43) is configured to determine whether or not the operation time is an abnormal value, and
   the standard operation time calculation unit (44, 244) does not use the operation time that has been determined to be an abnormal value by the operation time correction unit (43) to calculate the standard operation time (35).

7. The manufacture management apparatus (1) according to any one of claims 1 to 6, wherein the actual operation data acquisition unit (42) determines whether or not the operation time is lower than a predetermined lower limit value, and if the operation time is determined to be lower than a predetermined lower limit value, the manufacture management apparatus (1) outputs a warning.

8. The manufacture management apparatus (1) according to any one of claims 1 to 7, wherein the operation time correction unit (43) is configured to calculate the corrected operation time based on a time period obtained by subtracting, from the operation time, a period in which the actual stock quantity for an object to be manufactured that is on standby in a state in which the operation can be performed on the object to be manufactured is 0, and a period in which the actual stock quantity for an object to be manufactured on which the operation has been performed and that is on standby in a state in which it can be subjected to a following manufacturing process is a maximum stock quantity.

9. A manufacture management method comprising:

   a planned stock quantity acquisition step of acquiring a planned stock quantity, which is a planned value of a stock quantity for an object to be manufactured in a given manufacturing process including an operation performed by an operator;
   an actual operation data acquisition step of acquiring an operation time of an actual operation performed by the operator in the manufacturing process, and an actual stock quantity, which is a stock quantity when the operation is performed; and
   an operation time correction step of calculating a corrected operation time by correcting the operation time based on the planned stock quantity and the actual stock quantity.

10. A manufacture management program for causing a computer to function as the manufacture management apparatus (1) according to any one of claims 1 to 8, the manufacture management program causing the computer to function as the respective units.

FIG. 1

# FIG. 2

PAST OPERATION RECORD
(DIFFERENCE IN TIME FROM
TARGET VALUE OCCURS)

201

| PREVIOUS PROCESS | CURRENT PROCESS | FOLLOWING PROCESS |

COLLECTION OF RECORD
&
CORRECTION OF STANDARD
OPERATION TIME

PLANNING AND IMPLEMENTATION
OF OPERATION PLAN USING
STANDARD OPERATION TIME OBTAINED
BY CONSIDERING RECORD AND INFLUENCE
OF PREVIOUS AND FOLLOWING PROCESSES

202

| PREVIOUS PROCESS | CURRENT PROCESS | FOLLOWING PROCESS |

# FIG. 3

| OPERATION SEQUENCE | OPERATION CONTENT | OPERATION TIME/RUNNING TIME (SECOND) | | | | | |
|---|---|---|---|---|---|---|---|
| | | 10 | 20 | 30 | 40 | 50 | 60 |
| 1 | PROCESS 1 | →——— | ———→ | | | | |
| 2 | PROCESS 2 | | | ——→ | | | |
| 3 | PROCESS 3 | | | | ——→ | | |
| 4 | PROCESS 4 | | | | | ———→ | |
| 5 | PROCESS 5 | ▨▨▨ | ▨▨▨ | ▨▨▨ | ▨▨▨ | ▨▨▨ | ▨▨▨ |
| 6 | PROCESS 6 | ▨▨▨ | ▨▨▨ | | | | |

# FIG. 4

PROCESS PREVIOUS TO PROCESS 2

PROCESS FOLLOWING PROCESS 2

PROCESS SEQUENCE

NORMAL: 1 2 3 4 5

ABNORMAL: 1 2 3 4 5

ABNORMAL=ON STANDBY

START

COMPLETE

## FIG. 5A

STOCK OF
PREVIOUS PROCESS

STOCK FOR
FOLLOWING PROCESS

| PREVIOUS PROCESS | CURRENT PROCESS | FOLLOWING PROCESS |

ACTUAL
OPERATION TIME
TACT TIME

## FIG. 5B

SPEED DECREASES
TO MATCH PREVIOUS PROCESS

| PREVIOUS PROCESS | CURRENT PROCESS | FOLLOWING PROCESS |

ACTUAL
OPERATION TIME
TACT TIME

## FIG. 6A

STOCK OF
PREVIOUS PROCESS

STOCK FOR
FOLLOWING PROCESS

| PREVIOUS PROCESS | CURRENT PROCESS | FOLLOWING PROCESS |

ACTUAL
OPERATION TIME

TACT TIME

## FIG. 6B

SPEED DECREASES
TO MATCH FOLLOWING PROCESS

| PREVIOUS PROCESS | CURRENT PROCESS | FOLLOWING PROCESS |

ACTUAL
OPERATION TIME

TACT TIME

## FIG. 7A

ACTUAL STOCK QUANTITY
OF PREVIOUS PROCESS

APPROPRIATE
STOCK QUANTITY

HALF OF
APPROPRIATE
STOCK QUANTITY

NO STOCK

0          0.5          1.0

## FIG. 7B

ACTUAL STOCK QUANTITY
FOR FOLLOWING PROCESS

MAXIMUM
STOCK QUANTITY

DOUBLE OF
APPROPRIATE
STOCK QUANTITY

APPROPRIATE
STOCK QUANTITY

0          0.5          1.0

FIG. 8

## FIG. 9

```
                    ( START )
                        |
                        | S1
             ╱────────────────────╲
            ╱  OPERATION TIME IS    ╲   YES
            ╲ LOWER THAN PREDETERMINED ╱─────────────────┐
             ╲  LOWER LIMIT VALUE?  ╱                     │
                   ╲────╱                                 ▼
                     | NO                    ┌────────────────────────┐  S2
                     |                        │    OUTPUT WARNING       │
                     | S3                     └────────────────────────┘
             ╱────────────────────╲                      │
            ╱  ACTUAL STOCK OF      ╲   NO                │
            ╲ PREVIOUS PROCESS IS IN A RANGE ╱────────┐   │
             ╲  OF PLANNED STOCK   ╱                  ▼   │
                   ╲────╱                    ╱──────────────╲   S4
                     | YES                  ╱ CORRECTION AMOUNT ╲  NO
                     |                      ╲ OF OPERATION TIME CAN BE ╱──────►
                     |                       ╲  CALCULATED?  ╱
                     |                          ╲────╱
                     |                            | YES
                     |                  ┌────────────────────────┐ S5
                     |                  │ CALCULATE CORRECTED     │
                     |                  │ OPERATION TIME          │
                     |                  └────────────────────────┘
                     |◄──────────────────────────┘
                     | S6
             ╱────────────────────╲
            ╱  ACTUAL STOCK FOR     ╲   NO
            ╲ FOLLOWING PROCESS IS IN A RANGE ╱────────┐
             ╲  OF PLANNED STOCK   ╱                   ▼
                   ╲────╱                    ╱──────────────╲   S7
                     | YES                  ╱ CORRECTION AMOUNT ╲  NO
                     |                      ╲ OF OPERATION TIME CAN BE ╱──────►
                     |                       ╲  CALCULATED?  ╱
                     |                          ╲────╱
                     |                            | YES
                     |                  ┌────────────────────────┐ S8
                     |                  │ CALCULATE CORRECTED     │
                     |                  │ OPERATION TIME          │
                     |                  └────────────────────────┘
                     |◄──────────────────────────┘
          ┌────────────────────────┐ S9
          │ DETERMINE OPERATION     │
          │ TIME OF PROCESS         │
          └────────────────────────┘
          ┌────────────────────────┐ S10
          │ COLLECT OPERATION TIMES │
          └────────────────────────┘
          ┌────────────────────────┐ S11
          │ REFLECT OPERATION TIME  │
          └────────────────────────┘
                     |
                 ( END )
```

# FIG. 10

**Europäisches Patentamt**
**European Patent Office**
**Office européen des brevets**

## EUROPEAN SEARCH REPORT

Application Number

EP 19 17 5367

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 375 297 A1 (HITACHI LTD [JP]) 12 October 2011 (2011-10-12) * abstract; figure 1 * ----- | 1-10 | INV. G06Q50/04 |

TECHNICAL FIELDS SEARCHED (IPC)

G06Q

The present search report has been drawn up for all claims

| Place of search | Date of completion of the search | Examiner |
|---|---|---|
| Munich | 5 June 2019 | Weidmann, Matthias |

EPO FORM 1503 03.82 (P04C01)

## ANNEX TO THE EUROPEAN SEARCH REPORT
## ON EUROPEAN PATENT APPLICATION NO.

EP 19 17 5367

This annex lists the patent family members relating to the patent documents cited in the above-mentioned European search report.
The members are as contained in the European Patent Office EDP file on
The European Patent Office is in no way liable for these particulars which are merely given for the purpose of information.

05-06-2019

| Patent document cited in search report | Publication date | Patent family member(s) | Publication date |
|---|---|---|---|
| EP 2375297 A1 | 12-10-2011 | EP 2375297 A1<br>JP WO2010064281 A1<br>US 2011295647 A1<br>WO 2010064281 A1 | 12-10-2011<br>26-04-2012<br>01-12-2011<br>10-06-2010 |

EPO FORM P0459

For more details about this annex : see Official Journal of the European Patent Office, No. 12/82

**EP 3 582 172 A1**

**REFERENCES CITED IN THE DESCRIPTION**

**Patent documents cited in the description**

- JP 2018112125 A
- JP 2011158931 A
- JP H8194854 A